(19) Europäisches Patentamt / European Patent Office / Office européen des brevets

(11) **EP 3 543 399 A1**

(12) **EUROPEAN PATENT APPLICATION**
published in accordance with Art. 153(4) EPC

(43) Date of publication:
25.09.2019  Bulletin 2019/39

(51) Int Cl.:
*D07B 1/06* (2006.01)     *B60C 9/00* (2006.01)

(21) Application number: 17872609.7

(22) Date of filing: 25.10.2017

(86) International application number:
PCT/JP2017/038579

(87) International publication number:
WO 2018/092534 (24.05.2018 Gazette 2018/21)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 15.11.2016  JP 2016222591

(71) Applicant: Bridgestone Corporation
Tokyo 104-8340 (JP)

(72) Inventors:
• IKEHARA Kiyoshi
  Tokyo 104-8340 (JP)
• KINOSHITA Mitsuru
  Tokyo 104-8340 (JP)

(74) Representative: Oxley, Robin John George
Marks & Clerk LLP
15 Fetter Lane
London EC4A 1BW (GB)

(54) **STEEL CORD FOR REINFORCING RUBBER ARTICLES AND RUBBER CRAWLER AND TIRE USING SAME**

(57)    Provided is a steel cord for reinforcing rubber articles, which can prevent a reduction in the strength of the steel cord caused by twisting steel filaments, and a tire and a crawler using the steel cord. Provided is a steel cord 1 for reinforcing rubber articles formed by twisting a plurality of sheath strands 3 are twisted around a core strand 2, and the core strand 2 comprises: a core composed of two core filaments 2a aligned in parallel without being twisted; and at least one sheath composed of a plurality of sheath filaments 2b twisted around the core, and a diameter dc of the core filament 2a and a diameter ds of the sheath filament 2b satisfy the following expression (1):

$$dc < ds \quad (1)$$

and the tensile strength T (MPa) of the core filament 2a satisfies the relationship represented by the following expression (2):

$$T < 3650 - 17000 \times (dc - 0.15)^2 \quad (2).$$

EP 3 543 399 A1

FIG. 1

**Description**

TECHNICAL FIELD

The present invention relates to a steel cord for reinforcing rubber articles (hereinafter, also simply referred to as "steel cord"), a rubber crawler and a tire using the steel cord, and more specifically, to a steel cord for reinforcing rubber articles, which can prevent a reduction in the strength of the steel cord by twisting steel filaments, and a rubber crawler and a tire using the steel cord.

BACKGROUND ART

Typically, a large tension is applied to an endless rubber crawler when it is attached to a vehicle or the like and used. For this reason, steel cords as tensile bodies are embedded in such a rubber crawler in a row along the longitudinal direction thereof. Such an endless rubber crawler is usually manufactured by preparing an open-ended rubber crawler base body in which steel cords are embedded, superimposing the steel cords protruding from both ends thereof, and further subjecting the overlapped portion (endless site) to rubber vulcanization.

When such a rubber crawler receives an external damage enough to reach a steel cord, moisture flows through a portion where rubber is not permeated by capillary phenomenon, and rust may be caused by corrosion of the steel cord with water. In order to solve such a problem, conventionally, sufficient permeation of rubber inside a steel cord has been carried out. For example, Patent Document 1 proposes a steel cord in which two core filaments are aligned without being twisted and a sheath filament is twisted therearound, wherein the diameter of the core filament, the diameter of the sheath filament, and the twist pitch of the sheath filament are optimized to achieve both rubber permeability and productivity.

RELATED ART DOCUMENT

PATENT DOCUMENT

PATENT DOCUMENT 1 Japanese Unexamined Patent Application Publication No. 2012-127028

SUMMARY OF THE INVENTION

PROBLEMS TO BE SOLVED BY THE INVENTION

A steel cord having a core which is two core filaments aligned without being twisted like the steel cord proposed in Patent Document 1 is excellent in permeation of rubber into the inside thereof, and diffusion of rust or the like from a place where a cut damage is given can be suppressed. However, when a steel cord having a multi-twisted structure comprising: a steel cord having the structure proposed in Patent Document 1 as a core strand; and a plurality of sheath strands wound therearound is employed as a reinforcing material for construction vehicle tires, rubber crawlers, or the like, an assumed strength cannot be obtained. In other words, the strength of the steel cord has decreased to 90% or less (so-called twisting loss) with respect to the sum of the strengths of filaments constituting the steel cord, each filament being not twisted.

Accordingly, an object of the present invention is to provide a steel cord for reinforcing rubber articles, which can prevent a reduction in the strength of the steel cord caused by twisting steel filaments, and a rubber crawler and a tire using the steel cord.

MEANS FOR SOLVING THE PROBLEMS

In order to solve the above-described problems, the present inventors intensively studied to obtain the following findings. That is, when the twist of a multi-twisted steel cord having a core strand of 2+m structure as a core strand was relaxed to measure the strength of each strand, an assumed strength was obtained in each strand. However, it has become clear that preceding breakage of a core filament of a core strand occurs in a multi-twisted steel cord. Based on such findings, the present inventors further intensively studied to find that, by making the diameter and the tensile strength of each steel filament constituting a core strand predetermined ones, preceding breakage of a core filament of the core strand can be prevented, which can solve the above-described problems, thereby completing the present invention.

Specifically, a steel cord for reinforcing rubber articles according to the present invention is a steel cord for reinforcing rubber articles formed by twisting a plurality of sheath strands in which a plurality of steel filaments are twisted around a core strand in which a plurality of steel filaments are twisted, characterized in that

the core strand comprises: a core composed of two core filaments aligned in parallel without being twisted; and at least one sheath composed of a plurality of sheath filaments twisted around the core, and

a diameter dc of the core filament and a diameter ds of the sheath filament satisfy the following expression (1):

$$dc < ds \quad (1)$$

and the tensile strength T (MPa) of the core filament satisfies the relationship represented by the following expression (2):

$$T < 3650 - 17000 \times (dc - 0.15)^2 \quad (2).$$

In the steel cord according to the present invention, the structure of the core strand is preferably a structure comprising a core composed of two core filaments and a first sheath composed of m sheath filaments formed around the core, or a structure comprising a core composed of two core filaments, a first sheath composed of m sheath filaments formed around the core, and a second sheath composed of n sheath filaments formed around the first sheath, where m is from 5 to 7 and n is from 10 to 15. That is, preferably, the structure of the core strand is 2+m structure or 2+m+n structure, where m is from 5 to 7, and n is from 10 to 15. In the steel cord according to the present invention, preferably, the diameter dc of the core filament is from 0.15 to 0.40 mm. Further, in the steel cord according to the present invention, preferably, the tensile strength T of the core filament is 2,500 MPa or more. Still further, in the steel cord according to the present invention, preferably, the diameter dc of the core strand and the diameter ds of the sheath filament satisfy the relationship represented by the following expression (3):

$$dc > 0.5 \times ds \quad (3).$$

A rubber crawler according to the present invention is a rubber crawler characterized by being formed by using the steel cord caused for reinforcing rubber articles according to the present invention.

A tire according to the present invention is a tire characterized by being formed by using the steel cord for reinforcing rubber articles according to the present invention.

EFFECTS OF THE INVENTION

According to the present invention, a steel cord for reinforcing rubber articles, which can prevent a reduction in the strength of the steel cord by twisting steel filaments, and a rubber crawler and a tire using the steel cord can be provided.

BRIEF DESCRIPTION OF THE DRAWINGS

FIG. 1 is a cross-sectional view of a steel cord for reinforcing rubber articles according to one suitable embodiment of the present invention.

FIG. 2 is a cross-sectional view in the width direction of a rubber crawler according to one suitable embodiment of the present invention.

FIG. 3 is one side cross-sectional view of a tire according to one suitable embodiment of the present invention.

FIG. 4 is a graph illustrating an expression (2) and relationships between diameters dc and tensile strengths of core filaments of core strands of Examples and Comparative Examples.

MODE FOR CARRYING OUT THE INVENTION

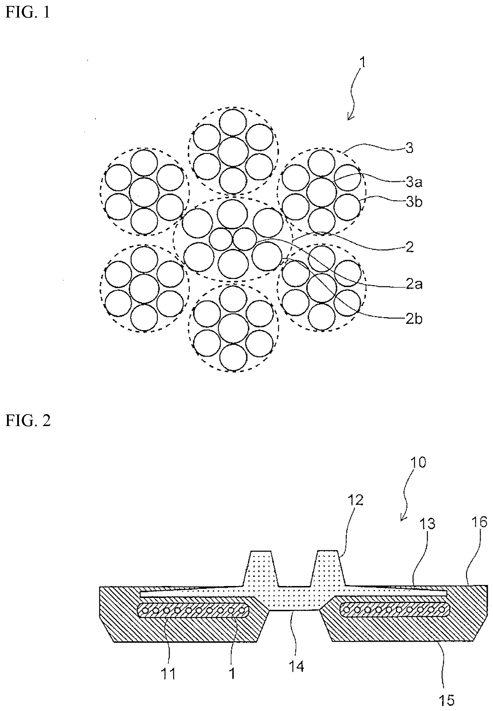

Hereinafter, a steel cord for reinforcing rubber articles of the present invention will be described in detail with reference to the drawings. FIG. 1 is a cross-sectional view of a steel cord for reinforcing rubber articles according to one suitable embodiment of the present invention. A steel cord 1 of the present invention has a multi-twisted structure in which a plurality of sheath strands 3 in which a plurality of steel filaments are twisted are twisted around a core strand 2 in which a plurality of steel filaments are twisted. Although, in the illustrated example, six sheath strands 3 are twisted around one core strand 2, the structure of a steel cord of the present invention is not limited thereto, and for example, the number of sheath strands may be from 6 to 10.

In the steel cord 1 of the present invention, the core strand 2 comprises a core composed of two core filaments 2a aligned in parallel without being twisted and at least one sheath composed of a plurality of sheath filaments 2b twisted around the core. In the steel cord 1 of the present invention, the structure of the core strand 2 is preferably a structure composed of a core composed of two core filaments 2a and a first sheath composed of m sheath filaments 2b formed around the core, or a structure composed of a core composed of two core filaments 2a, a first sheath composed of m sheath filaments 2b formed around the core, and a second sheath composed of n sheath filaments 2b formed around the first sheath, where m is 5 to 7 and n is 10 to 15. That is, preferably, a 2+m structure or a 2+m+n structure, where m is from 5 to 7, and n is from 10 to 15, and in the illustrated steel cord 1, the core strand 2 has a 2+6 structure. When the structure of the core strand 2 has such a structure, productivity of a steel cord is not compromised and sufficient strength can be obtained.

In the steel cord of the present invention, the diameter dc of a core filament 2a of the core strand 2 and the diameter ds of a sheath filament 2b satisfy the following expression (1):

$$\mathrm{dc} < \mathrm{ds} \quad (1),$$

or preferably, the following expression (4):

$$\mathrm{dc} < 0.92 \times \mathrm{ds} \quad (4).$$

As the diameter of the core filament 2a of the core strand 2 is closer to the diameter of the sheath filament 2b of the core strand 2, the roundness of the final multi-twisted steel cord deteriorates and the cross section of the cord becomes elliptical. In cases in which such a steel cord having poor roundness is used to manufacture a product, when the steel cord passes through a complicated path in a processing step, the steel cord is twisted halfway and a molding operation of the product deteriorates.

Further, in the steel cord 1 of the present invention, the diameter dc of the core filament 2a of the core strand 2 and the diameter ds of the sheath filament 2b satisfy the following expression (3):

$$\mathrm{dc} > 0.5 \times \mathrm{ds} \quad (3).$$

When the diameter of the core filament 2a becomes too small, the core becomes small, and therefore, a gap between the sheath filaments 2b becomes small and the rubber permeability of the core strand 2 may deteriorate.

Still further, in a steel cord 1 of the present invention, the tensile strength T (MPa) of the core filament 2a constituting the core strand 2 needs to satisfy a relationship represented by the following expression (2):

$$T < 3650 - 17000 \times (\mathrm{dc} - 0.15)^2 \quad (2).$$

By using the steel filament satisfying such requirements for the core filament 2a of the core strand 2, preceding breakage of the core filament 2a can be prevented.

When the diameter dc of the core filament 2a of the core strand 2 is large, in order to satisfy the relationship of the above expression (2), the tensile strength of the core filament 2a must be reduced, which increases the risk of preceding breakage of the core filament 2a and may increase the twisting loss. Accordingly, in the steel cord 1 of the present invention, the diameter dc of the core filament 2a of the core strand 2 is preferably in the range of from 0.15 to 0.40 mm, more preferably from 0.15 to 0.35 mm, and further preferably from 0.15 to 0.33 mm. When the diameter dc of the core filament 2a of the core strand 2 is in the above range, the effect of the present invention can be favorably obtained without deteriorating the productivity of the steel cord.

In the steel cord 1 of the present invention, the tensile strength T of the core filament 2a of the core strand 2 is preferably 2,500 MPa or more. This is because when the tensile strength T of the core filament 2a of the core strand 2 is less than 2,500 MPa, a strength of the finally obtained steel cord is not sufficient in some cases. The tensile strength T of the steel filament can be adjusted by changing the wire drawing conditions. For example, when processing distortion of a steel filament at a time of wire drawing is reduced, a steel filament with a small tensile strength T can be obtained.

It is important for the steel cord 1 of the present invention to satisfy the above requirements, and there is no other particular limitations on the steel cord 1. For example, the twist pitch and twist direction of the sheath filaments 2b constituting the core strand 2 can be appropriately selected according to a conventional method. Although in the illustrated example, a sheath strand 3 has a 1+6 structure in which six sheath filaments 3b are twisted around one core filament 3a, in the steel cord 1 of the present invention, the structure of the sheath strand 3 is not particularly limited. A 3+9, 3+9+15, 1+6+12 structure or the like other than the 1+6 structure may be employed.

The diameter of the core filament 3a and the diameter of the sheath filament 3b constituting the sheath strand 3 may be the same or different, and further, the twist pitch and twist direction of the sheath filaments 3b constituting the sheath strand 3 can also be appropriately selected according to a conventional method. Still further, the twist direction, the twist pitch and the like of the strand are also not particularly limited, and can be appropriately selected according to a conventional method.

Next, a rubber crawler of the present invention will be described.

A rubber crawler of the present invention is a rubber crawler using a steel cord for reinforcing rubber articles of the present invention. FIG. 2 is a cross-sectional view in the width direction of a rubber crawler according to one suitable embodiment of the present invention. In the illustrated rubber crawler 10, a steel cord 1 of the present invention which is a reinforcing material is coated with a treat rubber 11, and some of a metal core 14 having a detachment prevention protrusion 12 and a wing portion 13 on the inner peripheral surface side is embedded in a rubber member 16 formed with a lug 15 on an installation surface side.

In the rubber crawler 10 of the present invention, as long as the steel cord 1 of the present invention is used as a tensile body, for other structures and the material of each member, those commonly used may be appropriately adopted, and they should not be particularly limited. For example, the same rubber composition as that of a treat rubber 11 may be adopted as a rubber composition forming a rubber member 16, and in this case, the thickness of the treat rubber 11 may be appropriately selected to arrange the rubber member 16 while considering a thickness formed by the rubber member 16.

Next, a tire according to the present invention will be described.

A tire of the present invention is a tire using a steel cord for reinforcing rubber articles of the present invention. For example, the steel cord of the present invention can be used as a reinforcing material for a carcass ply or a belt. Since the steel cord of the present invention has a multi-twisted structure and the core strand is excellent in rubber permeability, the steel cord can be suitably used for large tires or the like for off-road use such as tires for construction vehicles traveling on a wasteland.

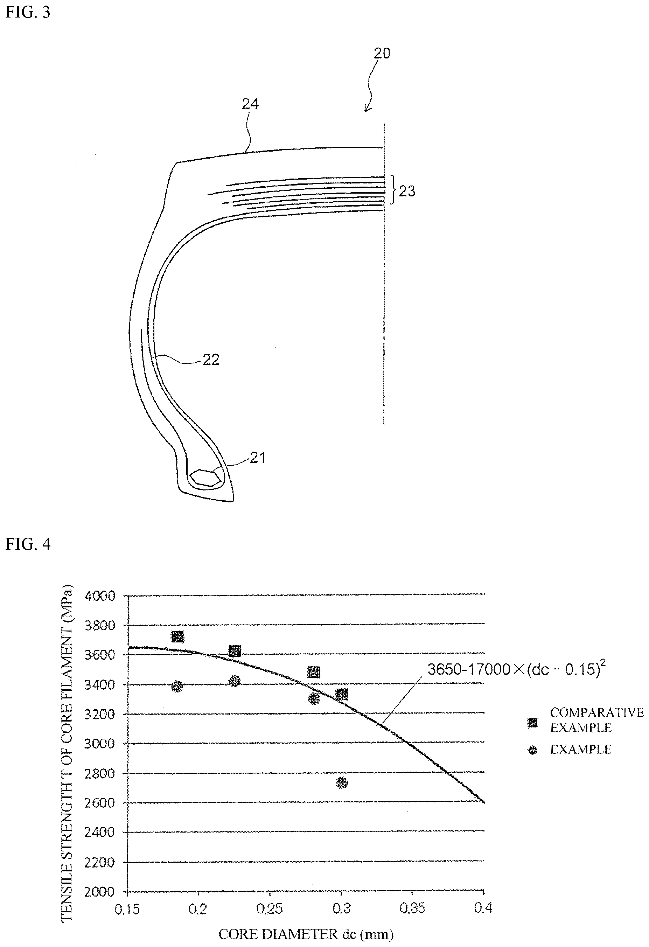

FIG. 3 is one side cross-sectional view of a tire according to one suitable embodiment of the present invention. The illustrated tire 20 is a construction vehicle tire comprising: a carcass 22 composed of a ply extending in the radial direction between a pair of bead cores 21; a belt 23 composed of at least two (six in the illustrated example) belt layers arranged on the outer side in the tire radial direction of a crown portion of the carcass 22; and a tread 24 arranged on the outer side in the tire radial direction of the belt 23. In the tire 20 of the present invention, as long as the steel cord 1 of the present invention is used as a reinforcing member, for other tire structures and the material of each member, those commonly used may be appropriately adopted, and they are not particularly limited.

EXAMPLES

Hereinafter, the present invention will be described in more detail by way of Examples.

< Examples 1 to 5 and Comparative Examples 1 to 5 >

Steel cords having the structures listed on Tables 1 to 3 were prepared. The strengths of the steel cords and the tensile strength of a steel filament constituting the steel cord are as listed on the same tables, and FIG. 4 is a graph illustrating an expression (2) and relationships between diameters dc and tensile strengths of core filaments of core strands of Examples and Comparative Examples. Measurement of the strength of the steel cords and measurement of the tensile strength of the steel filaments constituting the steel cords were carried out in accordance with JIS G 3510. The tensile strength T of the steel filaments was adjusted by controlling the wire drawing conditions. For each prepared steel cord, the twisting loss and presence or absence of a preceding breakage of a core filament of a core strand were evaluated. A calculation expression of the twisting loss is as follows.

(Twisting Loss)

The twisting loss (%) was calculated according to the following expression.

twisting loss (%) = (sum of filament strength (N) - measured value of cord strength

(N)) / sum of filament strength (N)×100

Here, the sum of filament strength is a total value of strengths of filaments constituting the steel cord, each filament not being twisted.

[Table 1]

| | | | Comparative Example 1 | Example 1 | Comparative Example 2 | Example 2 |
|---|---|---|---|---|---|---|
| Structure | | | 2×0.28+6×0.36+6×(0.36+6×0.33) | | 2×0.30+6×0.36+6×(0.36+6×0.33) | |
| Twist pitch | Core strand | | ∞/S18 | | ∞/S18 | |
| | Sheath strand | | ∞/S18 | | ∞/S18 | |
| | Cord | | ∞/S32.4 | | ∞/S32.4 | |
| Strength | Cord strength (N) | | 11809 | 13120 | 12841 | 13209 |
| | Sum of filament strength (N) | | 14324 | 14302 | 14366 | 14282 |
| | Filament strength (N) | 0.185 (mm) | - | - | - | - |
| | | 0.225 (mm) | - | - | - | - |
| | | 0.26 (mm) | - | - | - | - |
| | | 0.28 (mm) | 214 | 203 | - | - |
| | | 0.30 (mm) | - | - | 235 | 193 |
| | | 0.33 (mm) | 279 | 279 | 279 | 279 |
| | | 0.36 (mm) | 321 | 321 | 321 | 321 |
| Twisting loss (%) | | | 18 | 8 | 11 | 8 |
| Presence or absence of preceding breakage | | | present | absent | present | absent |
| dc (mm) | | | 0.28 | 0.28 | 0.30 | 0.30 |
| 3650 - 17000 × (dc - 0.15)$^2$ | | | 3363 | 3363 | 3268 | 3268 |
| Tensile strength of core filament (MPa) | | | 3475 | 3297 | 3325 | 2730 |

[Table 2]

| | | | Comparative Example 3 | Example 3 | Comparative Example 4 | Example 4 |
|---|---|---|---|---|---|---|
| Structure | | | 2×0.225+6×0.28+6×(0.28+6×0.26) | | 2×0.185+(6+11)×0.26+6×(0.36+6×0.33) | |
| Twist pitch | Core strand | | ∞/S14 | | ∞/S11/Z18 | |
| | Sheath strand | | ∞/S14 | | ∞/S18 | |
| | Cord | | ∞/S25 | | ∞/S32.4 | |
| Strength | Cord strength (N) | | 8045 | 8645 | 13552 | 14090 |
| | Sum of filament strength (N) | | 9408 | 9392 | 15264 | 15246 |
| | Filament strength (N) | 0.185 (mm) | - | - | 100 | 91 |
| | | 0.225 (mm) | 144 | 136 | - | - |
| | | 0.26 (mm) | 182 | 182 | 182 | 182 |
| | | 0.28 (mm) | 214 | 214 | - | - |
| | | 0.3 (mm) | - | - | - | - |
| | | 0.33 (mm) | - | - | 279 | 279 |
| | | 0.36 (mm) | - | - | 321 | 321 |
| Twisting loss (%) | | | 15 | 8 | 11 | 8 |
| Presence or absence of preceding breakage | | | present | absent | present | absent |
| dc (mm) | | | 0.225 | 0.225 | 0.185 | 0.185 |
| $3650 - 17000 \times (dc - 0.15)^2$ | | | 3554 | 3554 | 3629 | 3629 |
| Tensile strength of core filament (MPa) | | | 3622 | 3420 | 3720 | 3385 |

[Table 3]

| | | | Comparative Example 5 | Example 5 |
|---|---|---|---|---|
| Structure | | | 2×0.30+6×0.36+6×(0.36+6×0.33) | |
| Twist pitch | Core strand | | ∞/S18 | |
| | Sheath strand | | ∞/S18 | |
| | Cord | | ∞/S26.5 | |
| Strength | Cord strength (N) | | 12552 | 12912 |
| | Sum of filament strength (N) | | 14366 | 14282 |
| | Filament strength (N) | 0.185 (mm) | - | - |
| | | 0.225 (mm) | - | - |
| | | 0.26 (mm) | - | - |
| | | 0.28 (mm) | - | - |
| | | 0.30 (mm) | 235 | 193 |
| | | 0.33 (mm) | 279 | 279 |
| | | 0.36 (mm) | 321 | 321 |
| Twisting loss (%) | | | 13 | 10 |
| Presence or absence of preceding breakage | | | present | absent |
| dc (mm) | | | 0.30 | 0.30 |
| $3650 - 17000 \times (dc - 0.15)^2$ | | | 3268 | 3268 |
| Tensile strength of core filament (MPa) | | | 3325 | 2730 |

It is found from Tables 1 to 3 that in the steel cord of the present invention, the core filament of the core strand did not experience a preceding breakage and the twisting loss was small.

DESCRIPTION OF SYMBOLS

1      steel cord
2      core strand
2a    core filament
2b    sheath filament
3      sheath strand
3a    core filament
3b    sheath filament
10    rubber crawler
11    treat rubber
12    detachment prevention protrusion
13    wing portion
14    metal core
15    lug

16    rubber member
20    construction vehicle tire
21    bead core
22    carcass
23    belt
24    tread

**Claims**

1.  A steel cord for reinforcing rubber articles formed by twisting a plurality of sheath strands in which a plurality of steel filaments are twisted around a core strand in which a plurality of steel filaments are twisted, **characterized in that** the core strand comprises: a core composed of two core filaments aligned in parallel without being twisted; and at least one sheath composed of a plurality of sheath filaments twisted around the core, and
    a diameter dc of the core filament and a diameter ds of the sheath filament satisfy the following expression (1):

$$dc < ds \quad (1)$$

    and the tensile strength T (MPa) of the core filament satisfies the relationship represented by the following expression (2):

$$T < 3650 - 17000 \times (dc - 0.15)^2 \qquad (2).$$

2.  The steel cord for reinforcing rubber articles according to claim 1, wherein
    a structure of the core strand is a structure comprising a core composed of two core filaments and a first sheath composed of m sheath filaments formed around the core, or a structure comprising a core composed of two core filaments, a first sheath composed of m sheath filaments formed around the core, and a second sheath composed of n sheath filaments formed around the first sheath, where m is from 5 to 7, and n is from 10 to 15.

3.  The steel cord for reinforcing rubber articles according to claim 1 or 2, wherein
    the diameter dc of the core filament is from 0.15 to 0.40 mm.

4.  The steel cord for reinforcing rubber articles according to any one of claims 1 to 3, wherein
    the tensile strength T of the core filament is 2,500 MPa or more.

5.  The steel cord for reinforcing rubber articles according to any one of claims 1 to 4, wherein
    the diameter dc of the core strand and the diameter ds of the sheath filament satisfy the relationship represented by the following expression (3):

$$dc > 0.5 \times ds \qquad (3).$$

6.  A rubber crawler **characterized by** being formed by using the steel cord for reinforcing rubber articles according to any one of claims 1 to 5.

7.  A tire **characterized by** being formed by using the steel cord for reinforcing rubber articles according to any one of claims 1 to 5.

FIG. 1

FIG. 2

FIG. 3

FIG. 4

## INTERNATIONAL SEARCH REPORT

| | International application No. |
|---|---|
| | PCT/JP2017/038579 |

A. CLASSIFICATION OF SUBJECT MATTER
Int. Cl. D07B1/06(2006.01)i, B60C9/00(2006.01)i

According to International Patent Classification (IPC) or to both national classification and IPC

B. FIELDS SEARCHED

Minimum documentation searched (classification system followed by classification symbols)

Int. Cl. D07B1/06, B60C9

Documentation searched other than minimum documentation to the extent that such documents are included in the fields searched
Published examined utility model applications of Japan    1922-1996
Published unexamined utility model applications of Japan   1971-2017
Registered utility model specifications of Japan        1996-2017
Published registered utility model applications of Japan   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-81889 A (BRIDGESTONE CORP.) 26 March 1996, entire text (Family: none) | 1-7 |
| A | JP 2006-22440 A (BRIDGESTONE CORP.) 26 January 2006, entire text (Family: none) | 1-7 |
| A | JP 2012-171367 A (BRIDGESTONE CORP.) 10 September 2012, entire text & US 2013/0248074 A1, entire text | 1-7 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| | |

| Name and mailing address of the ISA/ <br> Japan Patent Office <br> 3-4-3, Kasumigaseki, Chiyoda-ku, <br> Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2017/038579

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-69774 A (BRIDGESTONE CORP.) 09 May 2016, entire text & US 2017/0232798 A1, entire text | 1-7 |
| A | JP 2014-163001 A (SUMITOMO RUBBER INDUSTRIES, LTD.) 08 September 2014, entire text & US 2015/0368859 A1, entire text | 1-7 |
| A | US 2015/0233027 A1 (SUNG et al.) 20 August 2015, entire text & KR 10-2015-0097130 A, entire text | 1-7 |

Form PCT/ISA/210 (continuation of second sheet) (January 2015)

**REFERENCES CITED IN THE DESCRIPTION**

**Patent documents cited in the description**

- JP 2012127028 A